# EUROPÄISCHE PATENTSCHRIFT

(11) **EP 0 976 518 B1**
(45) Veröffentlichungstag und Bekanntmachung des Hinweises auf die Patenterteilung: **23.10.2002**
(21) Anmeldenummer: 99114113.6
(22) Anmeldetag: 16.07.1999
(51) Int. Cl.: B29C 44/58, B29C 67/20

(54) **Verfahren und Vorrichtung zum Herstellen von Schaumstoffblöcken mit eckigem Querschnitt im Flocken-Verbund**
Method and apparatus for making a polygonal foam block of bonded foam pieces
Méthode et appareil pour faire un bloc polygonal de mousse à partir de pièces collées en mousse

(30) Priorität: 29.07.1998 DE 19834100
(43) Veröffentlichungstag der Anmeldung: 02.02.2000
(73) Patentinhaber: Hennecke GmbH, 51379 Leverkusen (DE)
(72) Erfinder: Sulzbach, Hans-Michael, 53639 Königswinter (DE); Büchel, Bodo, 53639 Königswinter (DE)
(74) Vertreter: Feldhues, Michael L.F., Dr.

(56) Entgegenhaltungen:
- US-A- 3 871 801

## Beschreibung

Die Erfindung betrifft ein Verfahren gemäß dem Oberbegriff des Anspruchs und eine Vorrichtung gemäß dem Oberbegriff des Anspruchs zum Herstellen von Schaumstoffblöcken mit eckigem Querschnitt im Flocken-Verbund

Ein solches Verfahren und eine solche Vorrichtung sind aus der US-A-3 871 801 bekannt.

Die Herstellung von Verbundblöcken mit eckigem Querschnitt aus Schaumstoffflocken, beispielsweise Polyurethan-Schaumstoffflocken, nach dem vorbeschriebenen Verfahren ist allgemein bekannt. Dabei werden die Flocken mit einem Bindemittel besprüht oder miteinander versintert oder verschmolzen. Je nach der Art des Füllquerschnitts des gewählten Formkastens weisen die gefertigten Blöcke neben der Rundblockform in der Regel rechteckigen oder quadratischen Querschnitt auf; sie können aber auch eine andere eckige Form aufweisen.

Während bei Rundblöcken über den Füllquerschnitt homogene Dichteverteilung erzielbar ist, ist es bei eckigen Füllquerschnitten nachteilig, daß sich bei der Blockherstellung, insbesondere in Abhängigkeit von der Flockengröße und der Neigung der Flocken zur Brückenbildung, beim Einfüllen der Flocken in den Formkasten speziell in dessen Ecken Hohlräume und Abrundungen bilden, wobei außerdem in diesen Ecken eine niedrigere Dichte entsteht als im Blockinneren. Insbesondere die Verarbeitung von Flocken in den gängigen Größen von 12 bis 15 mm bereitet die besagten Schwierigkeiten.

Wegen der Hohlräume und abgerundeten Ecken sowie der inhomogenen Dichte - über den Blockquerschnitt gesehen - wurde schon versucht, von Hand Flocken in die Ecken nachzustopfen. Dies bedeutet einen höheren Zeitaufwand bei der Fertigung, und die damit in den Ecken erzielte Dichte hängt allein vom Geschick des Bedienungspersonals ab und ist nicht reproduzierbar.

Für die Verwendung des Blockmaterials für Gegenstände gehobener Ansprüche ist es deshalb häufig erforderlich, den fertigen eckigen Flocken-Verbund-Block zu beschneiden, um unrunde Kanten und inhomogene Ecken zu eliminieren. Durch diese Maßnahme entsteht allerdings etwa 10 % Abfall, für welchen die Fertigungsarbeit verloren ist, auch wenn sich dieser Abfall in der Regel für minderwertige Qualitäten wiederverwerten läßt.

Es besteht deshalb die Aufgabe, eckige Schaumstoff-Verbund-Blöcke durch Verdichtung des Flockenmaterials mit scharfen Kanten und mit homogener Dichteverteilung über den gesamten Blockquerschnitt herzustellen.

Diese Aufgabe wird dadurch gelöst, daß vor dem Einfüllen der Schaumstoffflocken der Querschnitt in jeder von zwei Formwänden gebildeten Ecke auf einen Füllquerschnitt erweitert wird, und daß nach dem Einfüllen der Schaumstoffflocken der Füllquerschnitt auf die gewünschte Form des Querschnitts des zu fertigenden Blockes reduziert wird, und daß erst danach die Füllung auf die gewünschte Dichte bzw. Blockhöhe verdichtet wird.

Durch diese Maßnahme wird erreicht, daß der gesamte gefertigte Flocken-Verbund-Block auch bei gehobenen Qualitätsansprüchen, insbesondere wegen seiner homogenen Dichteverteilung und voll ausgefüllten Ecken, verwendbar ist. Abfall entsteht dabei nicht. Auch Nachstopfen von Hand ist nicht erforderlich. Es versteht sich von selbst, daß die Erweiterung und Reduzierung des Füllquerschnittes über die gesamte Höhe des Formkastens bzw. der Füllhöhe erfolgen muß.

In der Praxis handelt es sich bei der Herstellung solcher Blöcke meistens um rechteckige, insbesondere um quadratische. Die neue Erfindung läßt sich aber auf die Herstellung aller eckigen Blöcke anwenden. Je mehr Ecken der Block aufweist, desto geringer ist bei seiner herkömmlichen Herstellung die Gefahr der Inhomogenität der Dichte und unausgefüllter Ecken. D.h. auf der anderen Seite, daß bei der Herstellung von viereckigen oder gar nur dreieckigen Blöcken die Anwendung des neuen Verfahrens besonders vorteilhaft ist.

Die neue Vorrichtung zum Herstellen von Schaumstoffblöcken mit eckigem Querschnitt im Flocken-Verbund-Verfahren geht aus von einem Formkasten mit einem Boden und mehreren darauf stehenden, aneinandergrenzenden Formwänden und einem in Richtung des Bodens bewegbaren Stempel.

Das Neue ist darin zu sehen, daß an jeder durch zwei aneinandergrenzende Formwände gebildeten Ecke eine der Formwände unterteilt ist in ein festes Wandteil und eine daran gehaltene, um eine senkrechte Schwenkachse bewegbare Klappe, welche zwischen einer nach außen weisenden Position und einer mit dem festen Wandteil parallelen Position schwenkbar ist.

Dadurch wird erreicht, daß vor dem Füllen der Füllquerschnitt durch Nach-Außen-Schwenken der bewegbaren Klappen in den Ecken vergrößert wird und daß diese Position während des Füllens mit den Flocken beibehalten wird. Mit Beendigung des Füllvorganges werden die Klappen nach innen gefahren, wodurch die Flocken aus diesen erweiterten Bereichen nach innen verdrängt werden, so daß vorher eventuell vorhandene Hohlräume verschwinden und die an sich niedrigere Dichte in diesen Bereichen auf das normale Maß erhöht wird. Die Größe der erforderlichen Erweiterung des Füllquerschnittes bzw. die damit einhergehenden erforderlichen Öffnungswinkel der Klappen sowie deren Breite lassen sich in Abhängigkeit von den Eigenschaften der Flocken am besten empirisch ermitteln.

Vorzugsweise weist die jeweils gegen eine Klappe anliegende Formwand im Bereich des Schwenkwinkels α der Klappe eine diesem Schwenkwinkel α entsprechende Krümmung auf.

Diese Ausführungsform ist besonders vorteilhaft, weil dann beim Einfüllen der Flocken in den Formkasten bei nach außen geschwenkten Klappen stets eine Abdichtung zur angrenzenden Formwand besteht, so daß keine Flocken austreten können. Diese Abdichtung bleibt auch beim Zurückfahren der Klappen in ihre Endposition erhalten.

Vorzugsweise sind die Klappen mit einer Hydraulik-Vorrichtung betätigbar.

Damit läßt sich vorteilhaft die notwendige Druckkraft zum Bewegen der Klappen aufbringen. Eine Betätigung von Hand mit Verriegelung usw. wäre natürlich auch möglich, ist aber sehr zeit- und personalaufwendig.

In an sich üblicher und vorteilhafter Weise ist die neue Vorrichtung mit einem Steuergerät ausgestattet, so daß die Fertigungsvorgänge im wesentlichen automatisch oder teilautomatisch ablaufen. Dieses Steuergerät wirkt entsprechend auf den Stempel und die Hydraulik-Vorrichtungen der Klappen sowie auf den Entleerungsvorgang ein.

Die Entleerung der Vorrichtung erfolgt in an sich bekannter Weise durch Hochziehen des dementsprechend gestalteten Formkastens und Wegschieben des gefertigten Blockes oder durch Herunterklappen von Formwänden und Entfernen des Blockes. In jedem Falle muß der Stempel vor dem Entleeren zurückgefahren sein.

Es versteht sich, daß der Formkasten vorzugsweise in an sich bekannter Weise rechteckigen oder quadratischen Querschnitt aufweist.

In der Zeichnung ist die neue Vorrichtung rein schematisch dargestellt und nachstehend näher beschrieben. Es zeigen:
- Fig. 1: die Vorrichtung mit locker gefülltem Formkasten im Querschnitt,
- Fig. 2: die Einzelheit A gemäß Fig. in vergrößerter Darstellung und

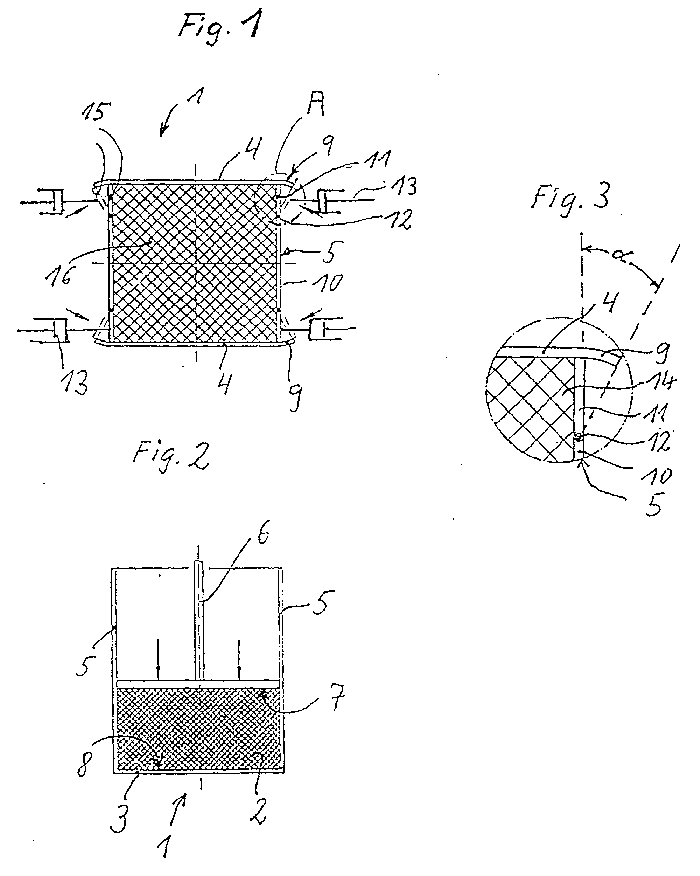

- Fig. 2: die Vorrichtung im Längsschnitt mit einem fertigen Block im Formkasten.

In Fig. 1, 2 besteht die Vorrichtung aus einem Formkasten 1 für die Herstellung eines Verbundblockes 2 (Fig. 2) mit quadratischem Querschnitt. Der Formkasten 1 ist durch einen Boden 3 und Formwände 4, 5 begrenzt. Über dem Formkasten 1 ist ein in diesen hineinfahrbarer, hydraulisch betätigbarer und von einem nicht dargestellten Steuergerät steuerbarer Stempel 6 angeordnet. Seine Preßfläche 7 entspricht in Größe und Form im wesentlichen dem Querschnitt 8 des zu fertigenden Blockes 2. Die Enden der einander gegenüberliegenden Formwände 4 weisen eine Krümmung 9 (Fig. 2, 3) auf, während die dazu senkrecht angeordneten, einander gegenüberliegenden Formwände 5 jede aus einem Wandteil 10 bestehen, an welchem Klappen 11 um eine Schwenkachse 12 mittels Hydraulikvorrichtungen 13 bewegbar gehalten sind. Zwischen den Wänden 4 und den Klappen 11 sind jeweils Ecken 14 gebildet. Der Füllquerschnitt ist mit 15 bezeichnet und die Füllung mit 16.

In Fig. 2 befindet sich der Stempel 6 in der Endstellung des Verdichtungsvorganges und der Block 2 ist von diesem, dem Boden 3 und den Formwänden 4, 5 eingeschlossen, wobei jeweils das Wandteil 10 und die Klappen 11 miteinander parallel stehen.

Die Arbeitsweise bzw. das neue Verfahren mit der neuen Vorrichtung ist wie folgt:

Die Formwände 4, 5 des Formkastens 1 ruhen bei um den Winkel α von 30° nach außen geschwenkten Klappen 11 der Formwände 5 abdichtend auf dem Boden 3. Dabei liegen die Klappen 11 abdichtend an den Krümmungen 9 an. Bei hochgefahrenem Stempel 6 werden nun mit Bindemittel besprühte Polyurethan-Schaumstoffflocken einer Kantenlänge von etwa 10 bis 15 mm in den Füllquerschnitt 15 in einer vorbestimmten Menge eingegeben. Die lose Schüttung derartiger Schaumstoffflocken besitzt eine Dichte von etwa 15 kg/m³. Die im Formkasten 1 befindliche Füllung 16 soll auf eine Blockhöhe von 0,5 m bei einer Dichte von 60 kg/m³ verdichtet werden. Zunächst werden die Klappen 11 nach innen in die parallele Position mit den Wandteilen 10 geschwenkt. Dabei werden die in den vergrößerten Ecken 14 befindlichen Flocken nach innen verdrängt und füllen dabei entstandene Hohlräume aus. Da die Querschnitts- bzw. Volumenvergrößerung für den Füllvorgang aus empirischen Ermittlungen vorbekannt war, ergibt sich mit dem Erreichen der Parallelposition der Klappen 11 mit den Wandteilen 10 eine homogene Dichte über den gesamten Querschnitt 8. Nun wird der Stempel 6 hochgefahren und anschließend der Formkasten 1 nach oben gezogen. Der fertige Block 2 kann nun entfernt werden.

## Patentansprüche

1. Verfahren zum Herstellen von Schaumstoffblöcken (2) mit eckigem Querschnitt im Flocken-Verbund, wobei Schaumstoffflocken in einen Formkasten (1) mit aneinandergrenzenden Formwänden (4, 5) eingefüllt werden und die Füllung (16) anschließend mittels eines Stempels (6) auf die gewünschte Dichte bzw. Blockhöhe verdichtet und der fertige Block (2) danach entformt wird, **dadurch gekennzeichnet, daß** vor dem Einfüllen der Schaumstoffflocken der Querschnitt (8) in jeder von zwei Formwänden (4, 5) gebildeten Ecke (14) auf einen Füllquerschnitt (15) erweitert wird, und daß nach dem Einfüllen der Schaumstoffflocken der Füllquerschnitt (15) auf die gewünschte Form des Querschnittes (8) des Blockes (2) reduziert wird, und daß erst danach die Füllung (16) auf die gewünschte Dichte bzw. Blockhöhe verdichtet wird.

2. Vorrichtung zum Herstellen von Schaumstoffblöcken (2) mit eckigem Querschnitt im Flocken-Verbund-Verfahren, bestehend aus einem Formkasten (1) mit einem Boden (3) und mehreren darauf stehenden, aneinandergrenzenden Formwänden (4, 5) und einem in Richtung des Bodens (3) bewegbaren Stempel (6), **dadurch gekennzeichnet, daß** an jeder durch zwei aneinandergrenzende Formwände (4, 5) gebildeten Ecke (14) eine der Formwände (5) unterteilt ist in ein Wandteil (10) und eine daran gehaltene, um eine senkrechte Schwenkachse (12) bewegbare Klappe (11), welche zwischen einer nach außen weisenden Position und einer mit dem Wandteil (10) parallelen Position schwenkbar ist.

3. Vorrichtung nach Anspruch 2, **dadurch gekennzeichnet, daß** die jeweils gegen eine Klappe (11) anliegende Formwand (4) im Bereich des Schwenkwinkels α der Klappe (11) eine diesem entsprechende Krümmung (9) aufweist.

4. Vorrichtung nach Anspruch 2 oder 3, **dadurch gekennzeichnet, daß** die Klappen (11) mit einer Hydraulik-Vorrichtung (13) betätigbar sind.

5. Vorrichtung nach einem der Ansprüche 2 bis 5, **dadurch gekennzeichnet, daß** der Formkasten (1) rechteckigen Querschnitt (8) aufweist.

6. Vorrichtung nach Anspruch 5, **dadurch gekennzeichnet, daß** der Formkasten (1) quadratischen Querschnitt (8) aufweist.

## Claims

1. Process for the production of foam slabs (2) of angular cross-section in a flock composite, foam flocks being introduced into a moulding box (1) with adjoining mould walls (4, 5) and the filling (16) then being compacted by means of a stamp (6) to the desired density or slab height and the finished slab (2) subsequently being removed from the mould, **characterized in that** before the foam flocks are introduced, the cross-section (8) in every corner (14) formed by two mould walls (4, 5) is extended to a filling cross-section (15), and **in that** after the foam flocks have been introduced the filling cross-section (15) is reduced to the desired shape of the cross-section (8) of the slab (2), and **in that** only then is the filling (16) compacted to the desired density or slab height.

2. Device for the production of foam slabs (2) of angular cross-section by the flock composite process, comprising a moulding box (1) with a base (3) and several adjoining mould walls (4, 5) standing thereon, and a stamp (6) which can be moved in the direction of the base (3), **characterized in that** at every corner (14) formed by two adjacent mould walls (4, 5), one of the mould walls (5) is divided into a wall part (10) and a flap (11) held thereon which can be moved around a perpendicular swivelling axis (12) and can be swivelled between a position pointing outwards and a position parallel with the wall part (10).

3. Device according to claim 2, **characterized in that** the particular mould wall (4) adjacent to a flap (11) has, in the region of the swivel angle α of the flap (11), a curvature (9) which corresponds to this.

4. Device according to claim 2 or 3, **characterized in that** the flaps (11) can be activated with a hydraulic device (13).

5. Device according to one of claims 2 to 5, **characterized in that** the moulding box (1) has a rectangular cross-section (8).

6. Device according to claim 5, **characterized in that** the moulding box (1) has a square cross-section (8).

## Revendications

1. Procédé pour fabriquer des blocs de mousse (2) à section droite anguleuse en un composite de flocs, où des flocs de mousse sont introduits dans un châssis de moule (1) comportant des parois de moule (4, 5) contiguës, et la charge (7) est ensuite densifiée à la densité ou à la hauteur de bloc voulue au moyen d'un poinçon (6), et le bloc (2) terminé est ensuite démoulé, **caractérisé en ce qu'**avant l'introduction des flocs de mousse, la section droite (8) est élargie à une section droite de remplissage (15) dans chaque angle (14) formé par deux parois de moule (4, 5), et **en ce qu'**après l'introduction des flocs de mousse, la section droite de remplissage (15) est réduite à la forme voulue de la section droite (8) du bloc (2), et **en ce que** la charge (16) n'est densifiée qu'ensuite à la densité ou la hauteur de bloc voulue.

2. Dispositif pour fabriquer des blocs de mousse (2) à section droite anguleuse dans le procédé à composite de flocs, consistant en un châssis de moule (1) comportant un fond (3) et plusieurs parois de moule (4, 5) contiguës qui se dressent sur celui-ci, et un poinçon (6) déplaçable en direction du fond (3), **caractérisé en ce que**, au niveau de chaque angle (14) formé par deux parois de moule (4, 5) contiguës, l'une des parois (5) du moule est divisée en une partie de paroi (10) et en un volet (11) maintenu à celle-ci et mobile autour d'un axe de pivotement vertical (12), qui peut être amené à pivoter entre une position dirigée vers l'extérieur et une position parallèle à la partie de paroi (10).

3. Dispositif selon la revendication 2, **caractérisé en ce que** chaque paroi de moule (4) en contact avec un volet (11) présente dans le domaine de l'angle de pivotement α du volet (11) une courbure (9) correspondant à celui-ci.

4. Dispositif selon la revendication 2 ou 3, **caractérisé en ce que** les volets (11) peuvent être actionnés au moyen d'un dispositif hydraulique (13).

5. Dispositif selon l'une des revendications 2 à 5, **caractérisé en ce que** le châssis de moule (1) présente une section droite (8) rectangulaire.

6. Dispositif selon la revendication 5, **caractérisé en ce que** le châssis de moule (1) présente une section droite (8) carrée.
